# EUROPEAN PATENT APPLICATION

(11) **EP 1 245 142 A1**
(43) Date of publication of application: **02.10.2002**
(21) Application number: 01201217.5
(22) Date of filing: 29.03.2001
(51) Int. Cl.: A01F 29/00, A01K 5/00

(54) **Device for shredding and discharging of straw, hay or the like**

(71) Applicant: Skorup Smede- og Maskinvaerksted, Skorup, 8882 Faarvang (DK)
(72) Inventor: Skovbo, Jens-Christian, Skorup, 8882 Farvang (DK)
(74) Representative: Elmeros, Claus

(57) **Abstract**

The invention relates to a device for shredding and discharging of straw, hay or the like in a barn or the like, said device comprising a feeding channel (1) including an open inlet end (17) through which a bale of straw (H) can be is fed to a radial blower housing (2) accommodating shredding and discharging means including a shredder wheel (7, 8) provided with drive means (5) for rotation of the shredder wheel (4), and where the radial blower housing (2) is provided with at least one peripherally oriented discharge channel (3) for discharging of straw, wherein the feeding channel (1) is provided with a substantially rectangular cross-section and includes a tilted inlet plate (1') on the lower side of the channel (1) on which a bale can be inserted and slide down towards the shredder wheel (4). During use, the device is tilted at an appropriate angle in such a manner that the bale of straw placed in the inlet housing connects with the shredder wheel and slides down towards the wheel for shredding by means of gravity. This makes the embodiment particularly simple and very reliable as it has only one single moveable part. Also, an embodiment according to the invention is particularly compact and may be constructed with the proper small dimensions whereby the field of application may be significantly increased.

## Description

The present invention relates to a device for shredding and discharging of straw for scattering in a barn or the like according to the preamble of claim 1.

In relation to the keeping of livestock straw, hay or the like is scattered on a regular basis in the barn where the livestock is present. For this purpose, straw which has previously been gathered and pressed into a bale of straw, hay or the like is used.

Discharging machines are known, in which a bale of straw is inserted and introduced to shredding after which the shredded straw is scattered onto the floor of the barn or on a field. However, these machines are quite voluminous and have to be operated by means of a tractor or a similar vehicle. This means that quite a lot of space is required, e.g. in the aisle of a barn in order to use this machinery for the discharging of straw. Also, it is often not possible to use such a discharging machine mounted on a tractor as the slotted floor of the barn will not be able to carry the weight of the discharging machine and the tractor.

In a barn, in which there is no room for such machines, the bale of straw may be shredded and scattered manually. For example, in relation to scattering of the so-called big-bales of straw or mini big-bales of straw, no practical and useable discharging machines for spreading of straw in barns or similar locations of a limited size are available today. Meanwhile, this is a quite time-consuming and labour-intensive task, in particular in relation to large-scale farms with large barns and/or a lot of livestock.

A device for shredding of straw, hay or the like is known from EP-A-0 265 751, in which a bale of straw is fed into a pipe and the bale falls down onto a shredding wheel where it is shredded and blown out through an exit pipe. This device is not very practical since the bale of straw must be manually lifted over the pipe edge just as there is a risk that the machine is "overfed" since the bale falls directly down onto the wheel. Thus, the disadvantage of this device is that it is not designed for use of large bales of straw, the so-called "big-bales", since the weight of such bales of straw makes the manual feeding of the shredder impossible or would at least result in an ergonomically unfortunate work posture if at all possible in practice due to the weight of the bales. Besides, the size of the bales of straw results in the shredding wheel being extremely loaded.

Thus, it is the purpose of the invention to create a device for shredding and discharging bales of straw, hay or the like which overcomes the above-mentioned disadvantages from the known machines and which makes utilisation of the device in small barns possible.

The invention consists of a device of the initially mentioned kind including the features of the characterising part of claim 1.

Hereby, a shredding and discharging machine is provided by means of which the bale of straw, hay or the like is in direct contact with the shredder wheel and whose rotation is simultaneously used to discharging the shredded straw. During use, the device is tilted at an appropriate angle so that the bale of straw placed in the inlet housing abuts the shredder wheel and slides down towards the shredder wheel by means of gravity. This makes the device according to the invention very simple and very reliable as it only has one single moveable part. In addition, the device according to the invention is particularly compact and may be designed with the proper small dimensions whereby the field of application is significantly increased.

A device according to the invention may have a compact design and thereby low weight. Also, it may be mounted to a mini-tractor or mini-loader such as a so-called "Bobcat™" whereby the load caused by weight will be reduced significantly. The result is that it is also possible to use a device according to the invention for shredding and discharging straw in a continuous manner in barns with narrow aisles and/or slotted floors which provides a significant increase in the field of application of a device according to the invention.

The device is suitable for big bales of straw. The device when mounted on a vehicle can be lowered and the vehicle that is driven in position and slits the inlet feeding plate of the feeding channel underneath a bale that hereby is pushed into the feeding channel. The bale is then lifted so it slides into the feeding channel whereby it is ready to be shredded and discharged when the shredder wheel is turned on.

In the preferred embodiment, the shredder wheel comprises a circular plate provided with cutting blades on the side facing the feeding channel. Hereby, an efficient shredding of the end of the bale is ensured just as the circular plate ensures that shredded straw will not get caught in the blower housing, e.g. on the back of the shredder wheel. Thus, the straw is not in contact with the drive shaft of the shredder wheel since it is situated at the opposite side of the knives.

Furthermore, in the preferred embodiment, the circular plate is provided with a number of evenly dispersed radial support means on which cutting blades have been mounted. Hereby, the shredder wheel may be a relatively light weight construction as the wheel plate may be constructed from a relatively thin plate material which may be supported where necessary. The blades may also assist in creating a circular air flow in blowing the shredded straw out through the discharge channel.

At the opposite side, the shredder wheel is provided with blower wings. Hereby, a vortex is created inside the radial blower housing which provides good circulation of the air flow propelling the shredded straw from the blower housing and out through the discharge channel.

In a preferred embodiment, the drive means of the shredder wheel is a hydraulic motor. In this embodiment, the motor may be connected to the hydraulic system of the vehicle on which the device is mounted and the device may be operated by the driver of the vehicle.

Alternatively, the drive means of the shredder wheel may be an electrical motor or e.g. a drive shaft connected to a power output shaft of the vehicle on which the device is mounted.

The shredder wheel may preferably be rotated in both directions and the blow house is furthermore provided with two peripheral discharge channels. With a device according this embodiment of the invention, the side from which shredded straw is to be discharged is chosen by simply changing the direction of rotation of the shredder wheel which also works as a blowing wheel as has already been explained above. This provides additional flexibility in relation to the field of application.

In the preferred embodiment of the invention, the device is provided with fastening means, preferably on the outside of the radial blower housing, for mounting of the device to a vehicle such as a mini-tractor, a mini-loader or the like. These fastening means preferably comprises a first fastening plate welded onto the outside of the housing and whereto another fastening plate is bolted. The second fastening plate is designed with mounting means corresponding to the mounting means on the vehicle to which the device is to be mounted. Hereby, only one of the fastening plates must be fitted to the vehicle, whereby the device is relatively easy to adapt to a variety of vehicles.

The inlet housing is preferably designed with a height of approx. 92.5 cm and a width of approx. 92.5 cm, said dimensions essentially corresponding to the outer measurements of a mini big-bale of straw. In this manner, the device is particularly suited be used in connection with the so-called mini big-bales of straw which no discharging machines have been able to do so far, since the size of such machines hitherto known are useless in connection with barns.

In the following, the invention is described in detail with reference to the drawings, in which
- fig. 1: is a perspective view of a device for shredding and discharging according to the invention,
- fig. 2: is an exploded side view of the device according to the invention from the side,
- fig. 3: shows an exploded perspective view hereof,
- fig. 4: is a perspective view of a first preferred embodiment of a device according to the invention,
- fig. 5: is a perspective end view of a second embodiemnt of the invention,
- fig. 6: is a perspective front view of the same,
- fig. 7: is a side view of same, and
- fig. 8: is a schematic view of a device according to the invention and mounted on a vehicle.

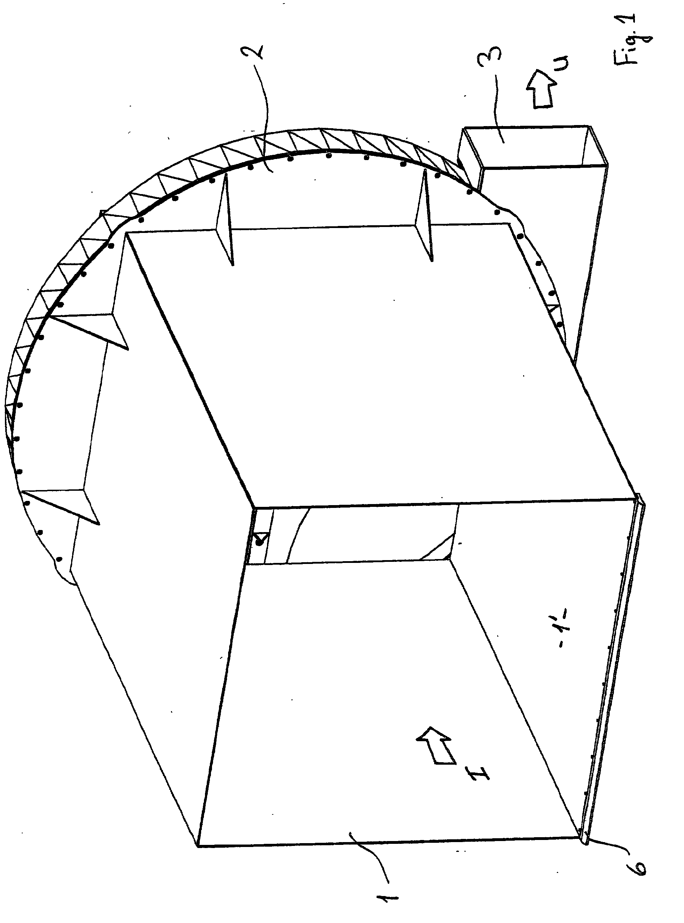

As shown in fig. 1, a shredding and discharging device according to the invention comprises a box-shaped feeding channel 1 which is dimensioned so that the height and width hereof essentially correspond to the standardised dimensions of a bale of straw, hay or the like, in particular the so-called mini big-bales. The feeding channel 1 is open at a first inlet end and provided with a radial blower housing 2 at the other end, in which a shredder wheel 4 is arranged whereby the bale of straw is shredded into shredded straw. At the open end, the feeding channel 2 is provided with a pickup rail 6 which protects the rim/edge of the channel against wear and tear and which may easily be replaced once the rail 6 is worn.

The radial blower housing 2 is provided with preferably two discharge channels 3 placed in the periphery of the radial blower housing 2 which is essentially cylindrical in shape. The shredded straw is blown sideways out of the device through the discharge channels 3 at a blow direction U which is essentially perpendicular to that of the feeding direction I.

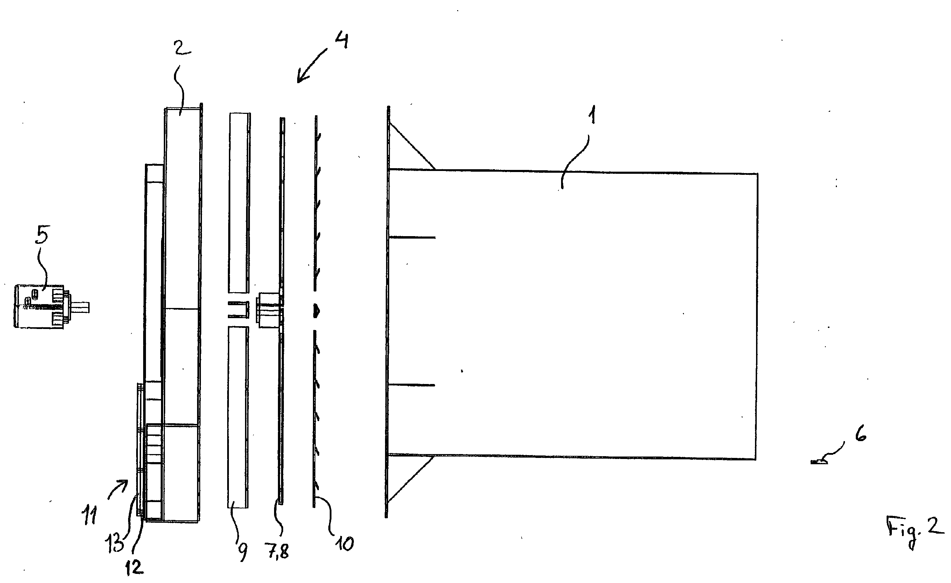

In the preferred embodiment of the invention, the shredder wheel 4 is driven by a hydraulic motor 5 as shown in figs. 2, 3 and 4. The hydraulic motor 5 is preferably connected to the hydraulic system of a vehicle such as a mini-loader e.g. a Bobcat.

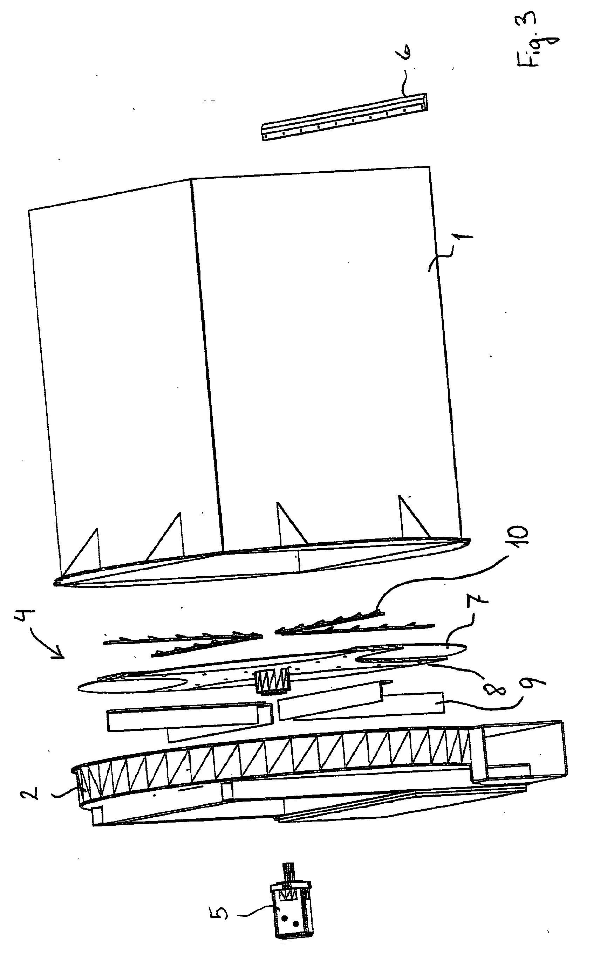

As illustrated in figs. 2 and 3, the shredder wheel 4 is constructed from a relatively thin, circular wheel plate 7, e.g. a 3 mm plate, mounted onto a "star-shaped" wheel 8 showing a number of symmetrically distributed support means on which knife blades 10 and blower wings 9 are mounted. This wheel 8 is preferably made of a metal plate of relatively large material thickness, e.g. 10-12 mm. The wheel 8 is mounted onto a shaft of the motor 5. The plate 7 shields the motor connection and ensures that the straws will not be caught in the moveable part of the device. On the side of the shredder wheel 4 receiving the bale of straw, the plate 7 is provided with a number of knives 10 for shredding the end of the bale of straw. On the back of the plate 7, a number of blower wings 9 are mounted whereby a circulation of the air flow is created which blows the shredded straw out through the discharge channels 3.

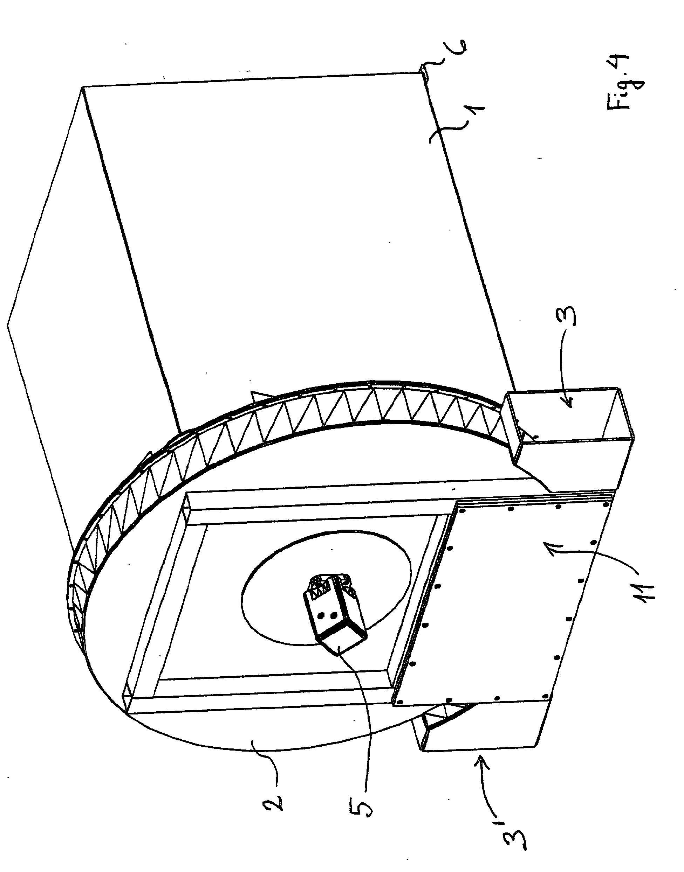

As it will be understood from figs. 4, 5 and 6, the side to which the straw is discharged may be altered, since the direction of rotation may be changed whereby the vortex flow in the radial blower housing 2 is reversed and the shredded straw is blown out the opposite discharge channel 3'.

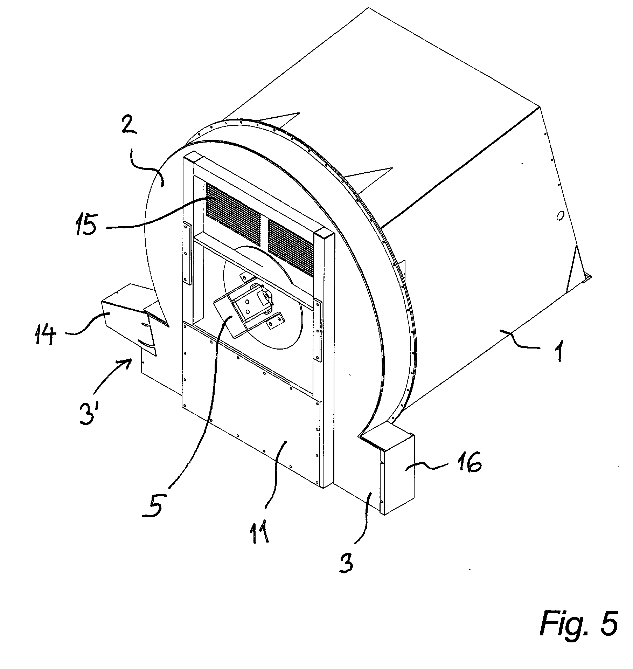

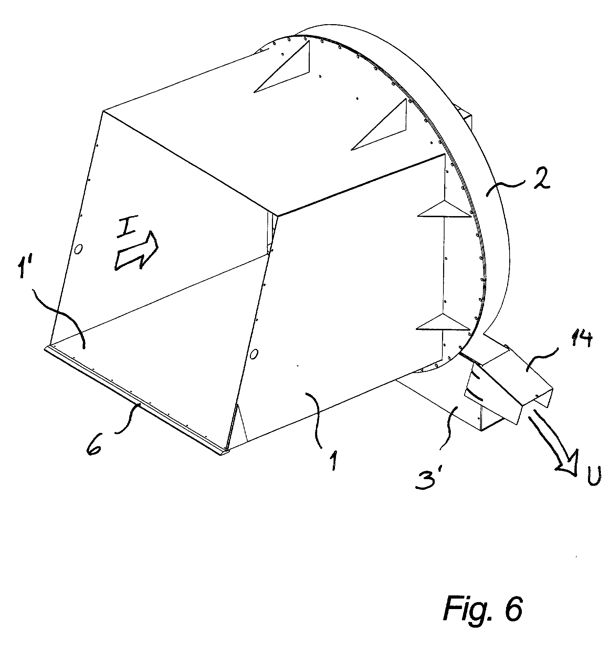

In fig. 5 and 6, a second embodiment of the invention is shown in perspective views. The box-like feeding channel 1 is attached to the radial blower housing 2 which is provided with two tangentially disposed discharge channels 3, 3'. The "active" discharge channel 3' is provided with an adjustable outlet nozzle 14 that may be positioned so that the spray of shredded material is directed in a predetermined path. The Nozzle 14 may either be mounted on the upper part of the discharge channel 3' (as shown in the figures) or on the lower side, e.g. for spraying the shredded material in a ballistic path over a fence, railing or the like. The "inactive" discharge opening 3 is preferably blinded by a blinding plate 16, so that access to the rotating shredder wheel is blocked through the inactive discharge path 3.

At the end of the radial blower housing 2, air intakes 15 may be provided. The air intake 15 is preferably adjustable so that the amount of air that is sucked into the blower may be adjusted. The radial blower will normally take air through the feeding channel 1. However, if this amount is insufficient, the side spray of shredded material is not satisfactory unless an additional air intake 15 is provided. This is particularly advantageous when the spray must reach an area a fair a distance away and/or due to the condition of the bale of straw, hay or the like, e.g. the humidity of the straw, the type of straw material, the compression, the amount, etc.

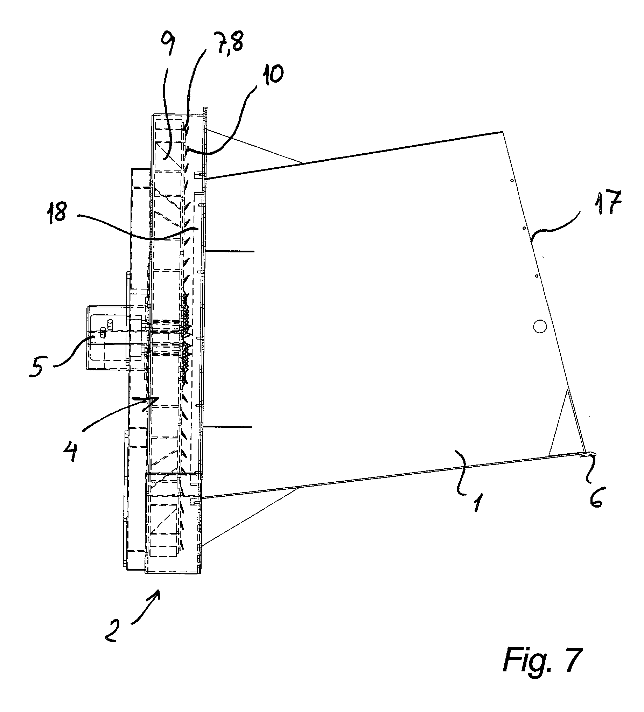

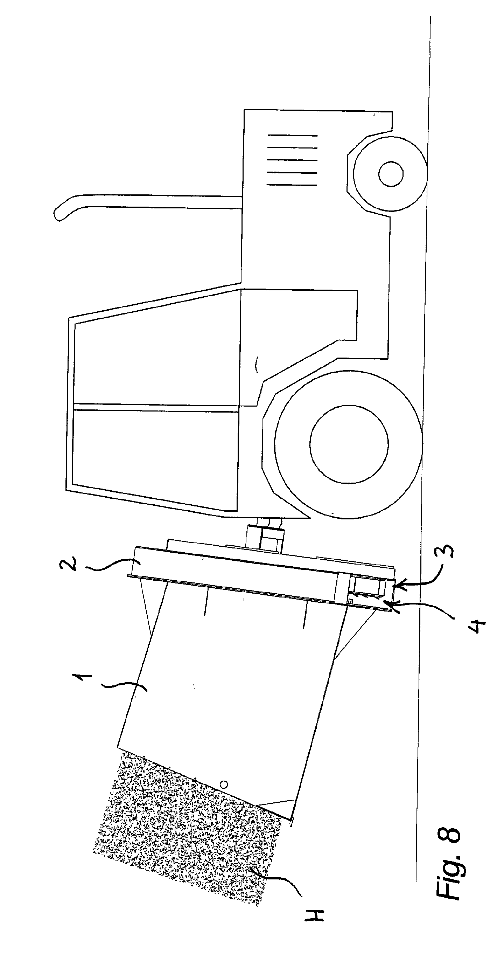

As shown in detail in fig. 7 and 8, the feeding channel 1 is provided with a tapered inlet end 17. This tapered end 17 ensures that a bale can be picked up from the floor of a storage without the upper edge of the end hit the wall behind the bale as the feeding channel 1 is inserted over the bale H. Also, it ensures a better and more reliable gripping operation of the bale.

Moreover, the feeding channel 1 is tilted relative to the radial blower housing 2. The latter means that the hydraulic motor 5 is somewhat retracted as compared to the first embodiment. This means that more compact overall dimensions of the device is achieved.

At the "inner" end of the feeding channel 1, retention bars 18 are provided around the opening between the cutting blades 10 of the shredder wheel 4 and the wall ember of the radial blower housing 2. This is to prevent straw from being dragged into the annular part of the blower housing 2 before being shredded by the knives 10. In this way, the risk clogging the space in the blower housing 2 is reduced.

As shown in figs. 2, 4 and 5, fastening means 11 are provided the outside of the blower housing 2 for mounting of the discharging machine onto a mini-tractor, a Bobcat or a similar and preferably relatively small vehicle as illustrated in fig. 8. The fastening means comprises a first fastening plate 12 welded onto the blow house 2 and a second fastening plate whose exact design is adapted to the mounting geometry of the vehicle on which the device is to be mounted. The plate 13 is bolted onto the first plate 12.

By the invention, it is realised that the discharge channel 3 or channels 3, 3' may be placed in the lower part of the radial blower housing, as shown on the figures, or at the top of the radial blower housing 2. In a further embodiment of the invention, the radial blower housing 2 could be provided with an essentially ring-shaped mounting flange that may be bolted or otherwise detachably fastened onto a corresponding flange on the feeding channel 1. In this embodiment, it will be possible to turn the radial blower housing 2 if a high blow-out level is desirable. This would also contributes to increasing the flexibility in relation to the field of application of a device according to the invention.

## Claims

1. A device for shredding and discharging of straw, hay or the like in a barn or the like, said device comprising a feeding channel (1) including an open inlet end (17) through which a bale of straw (H) can be is fed to a radial blower housing (2) accommodating shredding and discharging means including a shredder wheel (7, 8) provided with drive means (5) for rotation of the shredder wheel (4), and where the radial blower housing (2) is provided with at least one peripherally oriented discharge channel (3) for discharging of straw
**characterised by**
the feeding channel (1) is provided with a substantially rectangular cross-section and includes a tilted inlet plate (1') on the lower side of the channel (1) on which a bale can be inserted and slide down towards the shredder wheel (4).

2. A device according to claim 1, wherein the feeding channel (1) is tilted relative to the blower housing (2), so that the axis of rotation of the shredder wheel (4) is non-parallel to the direction of advancement of the bale in the feeding channel (1).

3. A device according to claim 1 or 2, wherein the shredder wheel (4) comprises a circular plate (7) provided with cutting blades (10) on the side facing the feeding channel (1).

4. A device according to claim 3, wherein the circular plate (7) is provided with a number of evenly dispersed radial support means (8) on which the blades (10) are mounted.

5. A device according to claim 3 or 4, wherein the shredder wheel (4) is provided with blower wings (9) on the opposite side of the cutting blades (10).

6. A device according to claims 1 to 5, wherein the drive means for the shredder wheel is a hydraulic motor (5).

7. A device according to claims 1 to 5, wherein the drive means for the shredder wheel is an electrical motor.

8. A device according to any of the preceding claims, wherein the shredder wheel (4) is rotatable in both directions and the radial blower housing (2) is provided with two peripheral discharge channels (3, 3') in opposite directions.

9. A device according to any of the previous claims, wherein the discharge channel (3) is provided with an adjustable nozzle (14) for directing the spray of shredded straw.

10. A device according to any of the preceding claims, wherein the device is provided with mounting means (11) preferably on the outside of the radial blower housing (2), for tiltable mounting of the device on a vehicle such as a mini-tractor, mini-loader or the like.

11. A device according to claim 1, wherein the feeding channel (1) is provided with height of approx. 92.5 cm and a width of approx. 92.5 cm, said measurements essentially corresponding to the dimensions of a mini big-bale of straw (H).
